Europäisches Patentamt

European Patent Office

Office européen des brevets

(11) Veröffentlichungsnummer: **0 293 515 B1**

## (12) EUROPÄISCHE PATENTSCHRIFT

(45) Veröffentlichungstag der Patentschrift: **05.08.92**

(21) Anmeldenummer: **87117680.6**

(22) Anmeldetag: **30.11.87**

(51) Int. Cl.⁵: **E03F 5/14**, B01D 29/17, B01D 29/25

(54) **Vorrichtung zum Entfernen von Rechen- und /oder Siebgut aus in einem Gerinne strömender Flüssigkeit.**

(30) Priorität: **16.05.87 DE 3716434**

(43) Veröffentlichungstag der Anmeldung:
**07.12.88 Patentblatt 88/49**

(45) Bekanntmachung des Hinweises auf die Patenterteilung:
**05.08.92 Patentblatt 92/32**

(84) Benannte Vertragsstaaten:
**AT BE CH ES FR GB GR IT LI LU NL SE**

(56) Entgegenhaltungen:
EP-A- 0 040 425  EP-A- 0 067 912
EP-A- 0 182 688  DE-A- 2 142 540
DE-A- 3 434 301  FR-A- 2 107 102
FR-A- 2 238 887  FR-E- 352 616
US-A- 3 379 312

(73) Patentinhaber: **Huber, Hans Georg**
**Zum Rachental 8**
**W-8434 Berching(DE)**

(72) Erfinder: **Huber, Hans Georg**
**Zum Rachental 8**
**W-8434 Berching(DE)**

(74) Vertreter: **Patentanwälte Dipl.-Ing. Rudolf Bi-brach Dipl.-Ing. Elmar Rehberg**
**Postfach 1453 Pütterweg 6**
**W-3400 Göttingen(DE)**

**Beschreibung**

Die Erfindung bezieht sich auf eine Vorrichtung zum Entfernen von Rechen- und/oder Siebgut aus in einem Gerinne strömender Flüssigkeit, mit einem bis zur Sohle des Gerinnes reichenden, schrägstehend und nichtangetrieben angeordneten, teilweise in die Flüssigkeit eintauchenden zylindermantelförmigen Rost, der über die Rosthöhe durchgehende Roststäbe und zwischen diesen gebildete Längsspalte aufweist und in eine schräg aufwärts gerichtete, zu einer Abwurfstelle führende und als Schneckenfördereinrichtung mit Gehäuse, Welle und Förderwendel ausgebildete Förderstrecke für das Rechengut übergeht, wobei die Förderwendel an den Roststäben entlangstreichend das Rechengut abnimmt, nach oben fördert und so den Rost immer wieder reinigt. Diese Vorrichtung kann insbesondere in Kläranlagen eingesetzt werden, ist jedoch auch vorteilhaft für andere Bereiche der Technik verwendbar, beispielsweise in der Textilindustrie, der Kunststoffindustrie u. dgl. Die Vorrichtung wird insbesondere dann eingesetzt werden, wenn geringe Gerinnebreiten in der Größenordnung von 100 bis 500 mm vorliegen und/oder auch geringe Spaltweiten erforderlich sind, um feines Rechengut abzuscheiden und hinwegzufördern.

Eine Vorrichtung der eingangs beschriebenen Art ist aus der DE-OS 21 42 540 bekannt. Diese Vorrichtung besteht im wesentlichen aus einer Schneckenfördereinrichtung, Gehäuse, Welle und Förderwendel, wobei ein aufgesetzter Motor vorgesehen ist, der seinen Drehantrieb auf die Welle und damit auf die Förderwendel überträgt. Das Gehäuse der Schneckenfördereinrichtung ist in seinem unteren Bereich, der in den Wasserspiegel eintaucht, völlig durch den Rost ersetzt, der aus über die Rosthöhe durchgehenden Roststäben besteht, zwischen denen Längsspalte gebildet sind, die somit parallel zur Achse der Welle auf dem zylindrischen Umfang verlaufen. Die Roststäbe besitzen innerhalb des Rosts keine Querabstützung und weisen im wesentlichen rechteckigen Querschnitt auf, wobei die Längsseite dieses rechteckigen Querschnitts in radialer Richtung von der Welle angeordnet ist. Diese Ausbildung der Roststäbe und der zwischen diesen gebildeten Längsspalten, an denen sich das Rechengut abscheidet, ist in mehrfacher Hinsicht nachteilig. Zum einen sind die Roststäbe vergleichsweise labil angeordnet und es ist schwierig, einen solchen Rost mit einer so hohen Genauigkeit herzustellen, daß die Förderwendel bei ihrem Umlauf auch an möglichst vielen Stellen des inneren Umfangs des Rosts mit diesem Kontakt hat. Nur dort, wo dieser Kontakt auftritt, wird das abgeschiedene Rechengut mitgenommen. An Stellen, an denen der Kontakt fehlt, besteht die Gefahr, daß sich das Rechengut aufbaut, den Rost zusetzt, so daß der hydraulische Widerstand des Rosts nachteilig erhöht wird. Zusätzlich besteht die Gefahr, daß bei einem solchen Aufbau von Rechengut mit einer bestimmten Dicke die umlaufend angetriebene Förderwendel letztlich dazu führt, daß solche Partien von Rechengut durch die Längsspalte hindurchgeführt werden und somit auf die gereinigte Seite der Flüssigkeit gelangen, so daß der Rost an dieser Stelle seine Funktion einbüßt. Dies ist umso leichter möglich, je labiler die Roststäbe angeordnet und ausgebildet sind, so daß sie sich elastisch in Umfangsrichtung bei Beaufschlagung durch die Förderwendel durchbiegen bzw. auffedernd die Spaltweite vergrößernd bewegen können. Wenn, wie in diesem Stand der Technik dargestellt, die Längsseite der etwa mit rechteckigem Querschnitt ausgebildeten Roststäbe in radialer Richtung angeordnet ist, ist das Widerstandsmoment gegen eine solche Durchbiegung zur Vergrößerung der Spaltbreite besonders ungünstig. Zudem erweitert sich der Durchtrittsquerschnitt bei derart angeordneten und ausgebildeten Roststäben in Durchtrittsrichtung, also radial zu der Achse der Welle lediglich proportional zum Radius, also vergleichsweise wenig, so daß auch hier die Gefahr besteht, daß durch die engste Stelle des Rosts durchgetretenes Rechengut sich in den Längsspalten absetzt, verkeilt und auch damit die frei Rostfläche dauerhaft verkleinert, wobei im übrigen dann der hydraulische Widerstand des Rosts ebenfalls ansteigt. Wenn im Rechengut unnachgiebige Gegenstände, wie Steine, Aststücke o. dgl. auftreten, führt die vergleichsweise elastische Ausbildung der Roststäbe dazu, daß solche Gegenstände außerhalb der engsten Stelle des Rosts sich zwischen den elastischen Roststäben einklemmen, wodurch die Rostfläche an dieser Stelle dauerhaft neben den eingeklemmten Gegenständen vergrößert wird, so daß die Abscheidesicherheit damit beeinträchtigt ist und auch wieder größere Gegenstände durch diese Stellen hindurchgefördert werden können. Bei der bekannten Vorrichtung wird im übrigen noch vorgeschlagen, die nach innen gekehrten Enden der Roststäbe als Messer auszubilden, um lange Faserstoffe zu zerschneiden. Auch dies ist insofern nachteilig, als damit die empfindlichen Messerkanten durch den schleifenden Kontakt mit der Förderwendel beeinträchtigt werden können. Insbesondere können diese Schneiden auch durch harte Gegenstände verbogen werden. Auch der Abrieb durch die Förderwendel ist damit nicht vernachlässigbar. Gänzlich unglücklich ist es, längere Fasern durchzuschneiden, weil diese dann so erzeugten kurzen Stücke sehr einfach durch die Spalte hindurchtreten und auf den gereinigten Teil der Flüssigkeit übertreten können, so daß die Abscheidung gerade nicht erreicht wird.

Aus der US-PS 2 929 504 ist eine ähnliche Vorrichtung bekannt, also mit schrägstehend angeordneter Welle und einer Förderwendel. Dabei ist das Gehäuse der Förderwendel jedoch bereits bis in den Bereich der Sohle durchgezogen ausgebildet und der Rost ersetzt hier nur einen Teil der Gehäusewandung. Der Rost ist als Siebblech mit einer Vielzahl von Langlochschlitzen ausgebildet, so daß die Spalte nur eine geringe axiale Erstreckung aufweist, wodurch die Spaltweite ganz erheblich stabilisiert wird. Hier besteht somit nicht die Gefahr, daß sich die Spaltweite infolge Ausweichens der elastischen Roststäbe verändern kann. Mit einem solchen Lochblech sind jedoch auch wieder andere Nachteile verbunden. Insbesondere tritt während der Abscheidung eine beachtliche Zopfwirkung auf, d. h. fadenförmiges Rechengut lagert sich, zopfbildend, an Begrenzungsstellen der Löcher an und versperrt auf diesem Wege den Durchtrittsquerschnitt für die Flüssigkeit. Es gibt also hier keine in Längsrichtung durchgehenden Längsspalte, sondern an jedem Ende eines Langlochschlitzes wird in Verbindung mit der sich drehenden Förderwendel gleichsam eine Schere oder eine Abschneideeinrichtung geschaffen, die so wirkt, daß abgeschiedenes Fördergut nur zum Teil von der Förderwendel nach oben hinweggefördert wird, während ein Großteil des abgeschiedenen Rechenguts einfach abgeschnitten wird und dann durch die Langlochschlitze auf den an sich gereinigten Teil der Flüssigkeit übertritt.

Aus der FR-A-21 07 102 ist ein von Drähten mit dreieckigem Querschnitt gebildeter Spaltfilter bekannt. Der Spaltfilter weist Rohrform auf, wobei das innere des Rohrs durch entsprechende Seiten des Querschnitts der nebeneinander angeordneten Drähte begrenzt wird. Der Abstand zwischen den einzelnen Drähten beträgt einige Mikrometer (1 Mikrometer = 0,001 mm). Zumindest die Kanten des Querschnitts der Drähte, die der Begrenzung des Rohrinnern zuzuordnen sind, weisen hierbei zwingend eine scharfkantige Kontur auf. Bei abgerundeten Kanten würde ein sich in Strömungsrichtung der zu filtrierenden Flüssigkeit anfangs verringernder Querschnitt bilden, der zu einer leichten Verstopfung des Filters führen würde. Der Spaltfilter ist nicht selbsttragend ausgebildet, es ist vielmehr ein Gehäuse zu seiner Lagerung vorgesehen. Stützringe für die Drähte verhindern das Auseinanderdrücken der Drähte durch die zu filtrierende Flüssigkeit. Eine Stabilität, die einen gehäuseunabhängigen Betrieb erlauben würde, wird dadurch jedoch nicht erreicht.

Aus der FR-A-352 616 ist ein rohrförmiger, vertikal orientierter Filter bekannt. Dieser wird von oben mit der zu filtrierenden Substanz beschickt. Im Innern des Filters läuft eine die Filterdurchtritte reinigende Bürstenvorrichtung um. Die Bürstenvorrichtung besteht aus einer borstenbewehrten Schnecke. Diese Schnecke ist jedoch keine Transportschnecke im Sinne der eingangs beschriebenen Art. Transportiert wird von dieser Schnecke vielmehr nur das an den Filterwandungen abgesetzte Material entlang dieser Filterwandungen. Sobald das Material sich von den Filterwandungen gelöst hat, wird es durch die Schwerkraft bzw. die Strömung der zu filtrierenden Substanz ohne Zuhilfenahme der Schnecke weiterbewegt. Die Transportschnecke gemäß der eingangs beschriebenen Art transportiert hingegen das Rechengut entgegen der Schwerkraft aus dem Absonderungsbereich hinaus.

Der Erfindung liegt die Aufgabe zugrunde, eine Vorrichtung der eingangs beschriebenen Art so weiterzubilden, daß einerseits die Spaltweite verläßlich konstant bleibt und andererseits die Nachteile einer Abschneidewirkung weitgehend vermieden werden, damit nicht nur eine verläßliche Abscheidewirkung mit immer wieder gereinigtem Rost erzielt wird, sondern auch der hydraulische Widerstand des Rosts über lange Betriebszeiten niedrig gehalten wird.

Erfindungsgemäß wird dies dadurch erreicht, daß die Roststäbe etwa dreieckigen oder trapezförmigen Querschnitt aufweisen und so angeordnet sind, daß eine Dreiecks- bzw. Trapezseite des Querschnitts tangential zur Umfangsrichtung der Förderwendel zeigt und sich im übrigen eine engste Stelle der Längsspalte auf möglichst kleinem Radius und daran anschließend ein sich überproportional erweiternder freier Querschnitt der Längsspalte in Strömungsrichtung der Flüssigkeit ergibt, daß die Kanten des Querschnitts der Roststäbe zur Steigerung der Abscheidewirkung und zur Reduktion der Abscheidewirkung der Förderwendel abgerundet ausgebildet sind, daß die die Längsspalte bildenden Roststäbe außen durch Abstützstäbe untereinander verbunden sind und daß die Welle der Schneckenfördereinrichtung nur im Bereich der sich an den Rost nach oben anschließenden Forderstrecke vorgesehen ist. Durch die Abstützung der Roststäbe durch die Abstützstäbe wird gleichsam ein Gitterwerk geschaffen, welches eine große Stabilität aufweist. Trotzdem werden die Nachteile von Rosten aus Lochblechen, mit Langlochschlitzen u. dgl. vermieden, weil der Förderwendel zugekehrt durchgehende Längsspalte gebildet werden, bei denen eine Abschneidewirkung vermieden ist. Der Rost erhält trotz der durchgehenden Längsspalte eine erhebliche Stabilität und einen großen Widerstand gegen Verdrillen. Die durch den schleifenden Kontakt der Förderwendel ausgeübten Kräfte können damit nicht zu einer nachteiligen Deformation führen. Auch mit dem Rechengut ankommende harte Gegenstände führen nicht dazu, daß diese zwischen den Längsspalten eingeklemmt werden, sondern die Roststäbe sind so stabil gehalten und angeordnet, daß auch solche harten Gegenstände mit dem abgeschiedenen Rechengut hinweggefördert werden, wobei die Spaltweite konstant bleibt und damit auch die Abscheide- und Siebwirkung konstant gehalten wird. Vorteilhaft wird die engste Stelle der Längsspalte auf möglichst kleinen Radius angeordnet, also möglichst nahe an der Kontaktstelle mit dem äußeren Umfang der Förderwendel, so daß sich deren Abstreifwirkung hier voll auswirken kann. Die Reinigungswirkung ist daher besonders groß und der hydraulische Widerstand des Rosts bleibt durch die immer wiederkehrende, sehr effektive Reinigung über die Betriebszeit konstant niedrig. Auch die abgerundeten Kanten sind insofern von Bedeutung, als eine Abschneide- und Scherwirkung in Verbindung mit dem Kontakt der Förderwendel damit vermieden wird. Im Gegenteil, faseriges oder fadenförmiges Rechengut wird um diese Kanten herumgezogen und auf diese Art und Weise die Abscheidewirkung ohne Abschneidewirkung erhöht. Trotz dieser guten Abscheidewirkung läßt es sich nicht vermeiden, daß ein geringer Anteil des Rechenguts auch durch die Längsspalte hindurchtreten kann. Dieses Rechengut kann sich jedoch in den Längsspalten nicht absetzen, weil sich hier der Querschnitt überproportional, also in größerem Maße, als es dem Radius von der Achse der Welle entspricht, vergrößert. In einem sich derart vergrößernden Querschnitt findet außerhalb der engsten Stelle keine Abscheidewirkung statt. Die dreieckige oder trapezförmige Querschnittsform der Roststäbe ist auch insofern vorteilhaft, als damit der Querschnitt beanspruchungsgerecht eingesetzt wird, etwa im Gegensatz zu einem rechteckigen Querschnitt der Roststäbe, bei dem die Längsseite in radialer Richtung angeordnet ist. Außerdem ermöglicht diese Querschnittsausbildung eine einfache und präzise Herstellung des Rosts, indem die Berührstellen zwischen den Roststäben und den Abstützstäben relativ klein gestaltet sind, was für eine präzise Schweißverbindung der Teile untereinander förderlich ist. Die überproportionale Steigerung des freien Querschnitts in Strömungsrichtung, also radial zu der Achse der Welle der Schneckenfördereinrichtung ist auch insofern vorteilhaft, als hierdurch die Abscheideleistung verbessert wird, weil eine starke Erweiterung des freien Querschnitts zu einer starken Reduzierung der Strömungsgeschwindigkeit führt und somit die Gefahr verringert ist, daß fadenförmiges Rechengut durch die freien Querschnitte von der engsten Querschnittsstelle abgelöst wird und in den gereinigten Teil der Flüssigkeit übertritt. Die erfindungsgemäße Ausführung der Vorrichtung läßt sich vorteilhaft auch dann einsetzen, wenn geringe Gerinnebreiten vorliegen, also Breiten unter etwa 500 mm, bei denen z. B. umlaufende Fangroste mit größerem Durchmesser als es dem Umfang bzw. Durchmesser der Fördereinrichtung entspricht, aus Platzgründen nicht mehr angewendet werden können. Auch weist die erfindungsgemäße Vorrichtung eine erhebliche Variabilität in der Spaltbreite auf. Diese kann von ca. 0,25 mm bis 5 mm oder darüberhinaus verändert werden, ohne daß prinzipielle Arbeitsweisen der Vorrichtung verlassen werden.

Im Bereich des Rosts fehlt die Welle und das Drehmoment wird nur über die Förderwendel selbst in diesem Bereich übertragen. Diese Ausbildung wirkt sich insbesondere bei hohen Strömungsgeschwindigkeiten vorteilhaft aus, weil die Welle, die zu einer Wirbelbildung vor der Ablagerung des Rechenguts führen würde, fehlt. Außerdem wird die Querschnittsverminderung durch die Welle an dieser Stelle vermieden. Zusätzlich kann der Rost aus Roststäben und Abstützstäben an seinem unteren Ende stirnseitig offen ausgebildet sein. Ein dort üblicherweise vorgesehenes Stirnblech kann also fehlen und ein sonst notweniger Sohlensprung wird an dieser Stelle vermieden. Dies ist insofern vorteilhaft, als durch das Fehlen des Stirnblechs auch die mit ihm hervorgerufene Verwirbelung der zu reinigenden Flüssigkeit wegfällt, so daß der Rost auch durch diese Maßnahme gleichmäßig und ohne große Wirbelbildung angeströmt wird. Dies begünstigt wiederum die Abscheidewirkung.

Der Querschnitt der Roststäbe kann symmetrisch zur Strömungsrichtung der Flüssigkeit ausgebildet sein, wobei auch die Anordnung natürlich in dieser Weise getroffen ist. So kann der Querschnitt die Form eines gleichschenkligen Dreiecks aufweisen, wobei der kleinere Winkel des Querschnitts an der Spitze des gleichschenkligen Dreiecks nach außen gekehrt ist.

Auch die Abstützstäbe können dreieckigen oder trapezförmigen Querschnitt aufweisen und so angeordnet sein, daß die größte Querschnittsbreite nach außen in Strömungsrichtung zeigt. Die Querschnitte der Roststäbe einerseits und der Abstützstäbe andererseits sind somit in entgegengesetzter Richtung angeordnet und vorgesehen, so daß sich gleichsam auf der Innenseite des Rosts und auf der Außenseite des Rosts flächenartige Teile befinden, die einerseits für das Zusammenwirken der Förderwendel sinnvoll sind oder andererseits eine Verbindung zwischen Roststäben und Abstützstäben, beispielsweise durch Schweißen, gestatten.

Die Roststäbe und die Abstützstäbe können auch etwa gleichen Querschnitt aufweisen, d. h. der Rost kann letztendlich aus Material mit identischer Querschnittsform erstellt werden. Es ist aber durchaus nicht nachteilig, wenn auch hier eine abweichende Querschnittsform angewendet wird, beispielsweise um in spezieller Weise die Stabilität zu fördern. Wichtig ist natürlich auch, daß die der Strömungsrichtung zugekehrte Seite der Abstützstäbe möglichst klein ist, so daß hier Ansatzpunkte oder Kanten für eine Zopfbildung vermieden werden.

Die Abstützstäbe können in einem solchen Abstand zueinander auf dem Umfang des zylindrischen Rosts angeordnet sein, der etwa der zehnfachen maximalen Breite der Roststäbe entspricht. Damit erhält der Rost ein gitterartiges Aussehen, wobei trotzdem in Richtung des Zylindermantels des Rosts durchgehende Längsspalte entstehen, die in dieser Richtung an keiner Stelle unterbrochen sind. Durch die große Vielzahl der Verbindungspunkte zwischen den Roststäben und den Abstützstäben erhält der Rost eine definierte Gestalt hoher Präzision, insbesondere im Bereich der inneren Fläche, die in schleifendem Kontakt zu dem äußeren Umfang der Förderwendel tritt. Dies ist für eine gute Abscheideleistung erwünscht bzw. Voraussetzung.

Die Förderwendel der Schneckenfördereinrichtung kann an ihrem unteren Ende frei auskragend vorgesehen und oberhalb des Rosts durch ein oder mehrere Gleitlagerringe abgestützt sein. Damit wird eine Lagerung der Schneckenfördereinrichtung unterhalb des Wasserspiegels vermieden. Die Gleitlagerringe lassen sich oberhalb des Wasserspiegels anordnen, und zwar zweckmäßig in dem Bereich, in welchem die Schneckenfördereinrichtung einen reduzierten Durchmesser aufweist.

Der mit den Roststäben des Rosts in Kontakt kommende Teil der Förderwendel kann auf seinem äußeren Umfang elastisch ausgebildet sein. Dies dient der Überbrückung von Fertigungsungenauigkeiten, die zwar infolge der besonderen Ausbildung des Rosts aus Poststäben und Abstützstäben schon klein sind, sich aber nicht grundsätzlich vermeiden lassen. Durch diese elastische Ausbildung besteht keine Aufbaugefahr im Bereich des Rosts, sondern dieser wird durch den verläßlichen Kontakt der Förderwendel mit dem Rost immer wieder gereinigt, so daß der hydraulische Widerstand des Rosts niedrig bleibt. Zu diesem Zweck kann die Förderwendel auf ihrem äußeren Umfang mit einer Borstenleiste, einer elastischen Abstreiflippe o. dgl. versehen sein. Durch diese Elemente wird die elastische Ausbildung realisiert. Es ist ersichtlich, daß die Rückstellkräfte und die Rückstellgeschwindigkeit eines solchen elastischen Materials durchaus ausreicht, um den fortwährenden Kontakt während des Drehantriebs der Förderwendel zu dem Rost bzw. den Roststäben sicherzustellen.

Im Bereich des Rosts können seitlich gehäuseartige Einlaufwandungen vorgesehen sein, wobei der Rost durch diese durchgehenden, also geschlossen ausgebildeten Einlaufwandungen, stabil gelagert und selbst zusätzlich noch stabilisiert wird. Es wirkt insbesondere einer Verdrillung des Rosts entgegen und gestattet es andererseits, eine Abdichtleiste gegenüber der Gerinnewandung ordnungsgemäß auszubilden und anzuordnen.

Die über den Bereich des Rosts und die anschließende Förderstrecke durchgehende Förderwendel kann im Bereich des Rosts einen größeren Außendurchmesser als im Bereich der anschließenden Förderstrecke aufweisen, wobei der Rost auf einem entsprechend größeren Durchmesser als das Gehäuse der Schneckenfördereinrichtung angeordnet ist. Durch diese Ausbildung ist der Durchmesser des Rosts weitgehend unabhängig von dem Durchmesser der Förderstrecke, wo durch diesen Sprung im Durchmesser eine Kompaktierwirkung im Bereich der Förderstrecke erreicht wird und es andererseits möglich ist, die Fläche des Rosts vergleichsweise groß auch dann zu wählen, wenn die Flüssigkeit im Gerinne in unterschiedlich starker Weise mit Rechengut belastet wird.

Die Vorrichtung wird anhand verschiedener Ausführungsbeispiele weiter erläutert und beschrieben. Es zeigen:

Figur 1     eine schematisierte perspektivische Darstellung einer ersten Ausführungsform der Vorrichtung im Einsatz,

Figur 2     eine Detaildarstellung einer Einzelheit gemäß der Kreisangabe Z in Figur 1,

Figur 3     eine Seitenansicht der Vorrichtung in einer weiteren Ausführungsform,

Figur 4     eine vergrößernde Darstellung der Vorrichtung gemäß Figur 3 im Rostbereich,

Figur 5     einen Ausschnitt eines Schnitts durch den Rost senkrecht zu der Achse der Welle der Fördereinrichtung,

Figur 6     eine ähnliche Schnittdarstellung mit elastisch ausgebildetem Randbereich der Förderwendel und

Figur 7     eine weitere Ausführungsmöglichkeit der elastischen Gestaltung der Förderwendel.

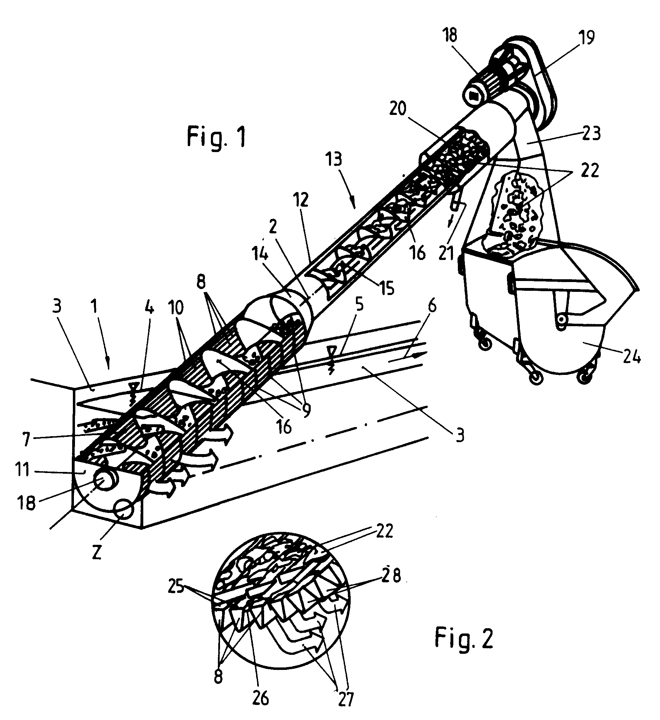

In einem in Figur 1 schematisch dargestellten Gerinne 1 ist die Vorrichtung mit ihrer Achse 2 schrägstehend, also weder horizontal noch vertikal, so angeordnet, daß sie mit einem Teil an Seitenwandungen 3 des Gerinnes 1 anschließt, in welchem sich ein Wasserstand 4 vor der Vorrichtung und ein demgegenüber niederer Wasserstand nach der Vorrichtung befindet, so daß das Gerinne 1 in Richtung eines Pfeils 6 durchströmt wird.

Die Vorrichtung weist in ihrem unteren Teil einen Rost 7 auf, der sich mindestens über eine solche Höhe parallel zur Achse 2 erstreckt, daß der unter den Wasserstand 4 eingreifende Teil sich immer im Wasser befindet und auch unterschiedlichen Wasserständen Rechnung getragen ist. Der Rost 7 besteht im wesentlichen aus Roststäben 8, die parallel zur Achse 2 auf der Mantellinie eines Zylinders angeordnet sind, sowie aus Abstützstäben 9, die sich über ein Zylindersegment tangential zu dem Umfang des Zylinders der Roststäbe 8 und damit senkrecht zu der Achse 2 erstrecken. Es versteht sich, daß die Abstützstäbe 9 über die Umfangsfläche des Rosts 7 bis auf die andere Seite durchgehend angeordnet sind, obwohl dies aus Übersichtlichkeitsgründen nicht dargestellt ist.

Die Abstützstäbe 9 befinden sich auf einem größeren Durchmesser als die Roststäbe 8, gesehen von der Achse 2 aus, so daß zwischen den Roststäben 8 parallel zur Achse 2 durchgehende und ununterbrochene Längsschlitze 10 gebildet sind. Der Rost 7 kann an seinem unteren Ende ein Stirnblech 11 aufweisen, welches zusätzlich zu den Abstützstäben 9 die Roststäbe 8 stabilisiert und in ihrer Lage festhält.

Im Anschluß an den Rost 7 schräg nach oben ist ein Gehäuse 12 einer Schneckenfördereinrichtung 13 als zylindrische Mantelfläche vorgesehen. In dem Gehäuse 12, welches auch einen konischen Absatz 14 aufweisen kann, ist eine Welle 15 angeordnet, die mit einer Förderwendel 16 verbunden ist bzw. diese trägt, die sich über die Gesamtlänge der Vorrichtung erstreckt und auch in den Teil der Vorrichtung hineinragt, in welchem der Rost 7 angeordnet ist. Dort ist gemäß Figur 1 die Welle 15 nicht vorgesehen bzw. angeordnet und die Förderwendel 16 besitzt einen größeren Durchmesser, der dem inneren Durchmesser der Roststäbe 8 angepaßt ist. Das untere Ende der Förderwendel 16 kann in einem Lager 17 im Bereich des Stirnblechs 13 gelagert sein. Am oberen Ende des Gehäuses 12 ist ein weiteres, hier nicht dargestelltes Lager vorgesehen. Dort ist auch ein Motor 18 und ein Getriebe 19 angeordnet, über die die Welle 15 und damit auch die Förderwendel 16 angetrieben wird. Die Förderwendel 16 kann über ihre axiale Länge nicht konstante Steigung aufweisen, wobei die Steigungen bereichsweise unterschiedlich gestaltet sein können, oder, wie dargestellt, am oberen Ende der Förderstrecke eine Kompaktierzone 20 gebildet sein, in deren Bereich die Förderwendel eine geringere Steigung aufweist. In diesem Bereich ist das Gehäuse 12 auch doppelwandig ausgebildet, wobei der innere Wandungsteil Durchbrechungen aufweist, damit beim Kompaktieren bzw. Zusammenpressen des Rechenguts abgeschiedene Flüssigkeit über ein Rohr 21 zurück in das Gerinne 1 geleitet werden kann, während das kompaktierte Rechengut 22 über eine Schurre 23 in einen Behälter 24 abgeworfen wird.

Wie insbesondere die Detaildarstellung Z gemäß Figur 2 erkennen läßt, besitzen die Roststäbe 8 etwa dreieckigen Querschnitt, in diesem Fall in Form eines gleichschenkligen Dreiecks, wobei die eine Dreiecksseite 25 tangential zum inneren Umfang des Rosts 7 angeordnet ist, so daß die Spitze des Dreiecks von der Achse 2 aus gesehen radial nach außen ragt. Damit werden die durchgehenden Längsschlitze 10 zwischen den Roststäben 8 gebildet, die engste Stellen 26 aufweisen, die infolge der lediglich abgerundeten Kanten des dreieckigen Querschnitts der Roststäbe 8 nahe am inneren Umfang, also im Anschluß an die Dreiecksseiten 25 vorgesehen sind. In diesem Bereich findet die Abscheidung des Rechenguts 22 gleichsam auf der Innenseite des Rosts 7 statt, während das durch den Rost 7 hindurchtretende Wasser gemäß den Pfeilen 27 einen sich überproportional erweiternden Querschnitt 28 im Anschluß an die engsten Stellen 26 vorfindet. Durch diesen überproportional, d. h. sich stärker, als es der Zunahme des Radiusses an dieser Stelle von der Achse 2 aus entspricht, erweiternden Querschnitt, wird die Strömungsgeschwindigkeit gemäß den Pfeilen 27, die in sehr starkem Maß herabgestellt, so daß die durchströmende Flüssigkeit nicht die Möglichkeit hat, das abgeschiedene Rechengut 22 durch die Längsschlitze 10 saugend hindurchzuziehen. Das Rechengut 22 verbleibt vielmehr in der abgeschiedenen Stellung und wird bei dem Antrieb der Förderwendel 16 von deren äußerem Rand abgenommen, ergriffen und auf der Innenseite des Rosts 7 nach oben hin weggeführt, wobei es dann in den Bereich des Gehäuses 12 und damit der Förderstrecke dieser Schneckenfördereinrichtung 13 gelangt, um schließlich kompaktiert und in den Behälter 24 abgeworfen zu werden. In Figur 2 sind die die Roststäbe 8 abstützenden Abstützstäbe 9 der Übersichtlichkeit halber nicht dargestellt. Selbstverständlich sind diese Abstützstäbe 9 vorhanden, da sie ein wesentliches Element für die Stabilisierung des Rosts 7 bilden, so daß sich selbst bei Auftreten von hartem Rechengut die Roststäbe 8 nicht durchbiegen können, so daß die Spaltweite der Längsschlitze 10 unverändert konstant gehalten wird. Damit bleibt die Abscheidesicherheit auch über die Betriebszeit erhalten und es werden andererseits keine harten Gegenstände, wie Steine u. dgl, zwischen den Roststäben 8 eingeklemmt. Auch die Durchtrittsflächen des Rosts 7 werden auf diese Art und Weise nicht versperrt.

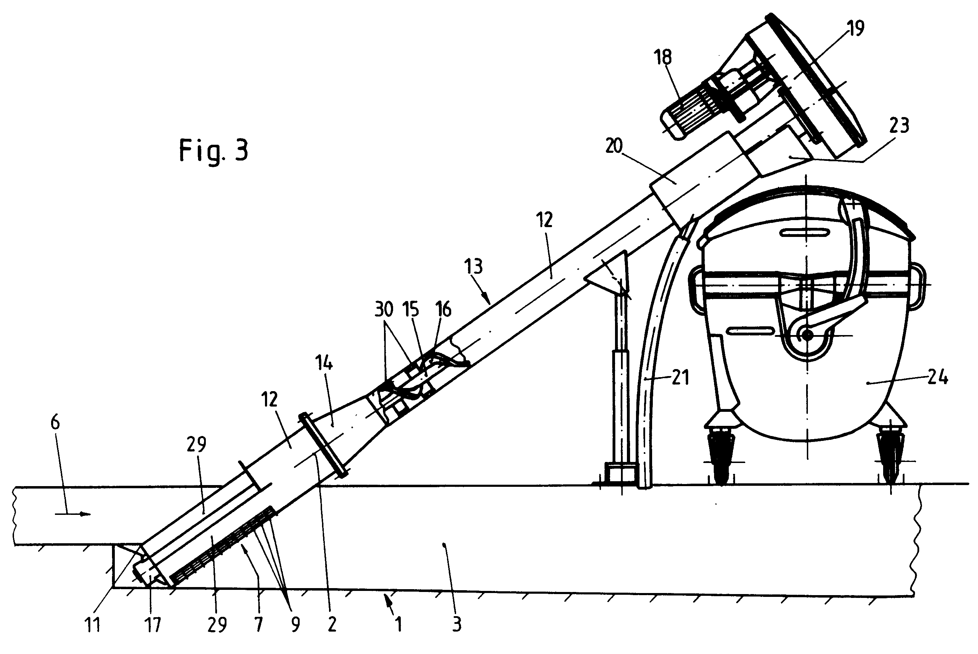

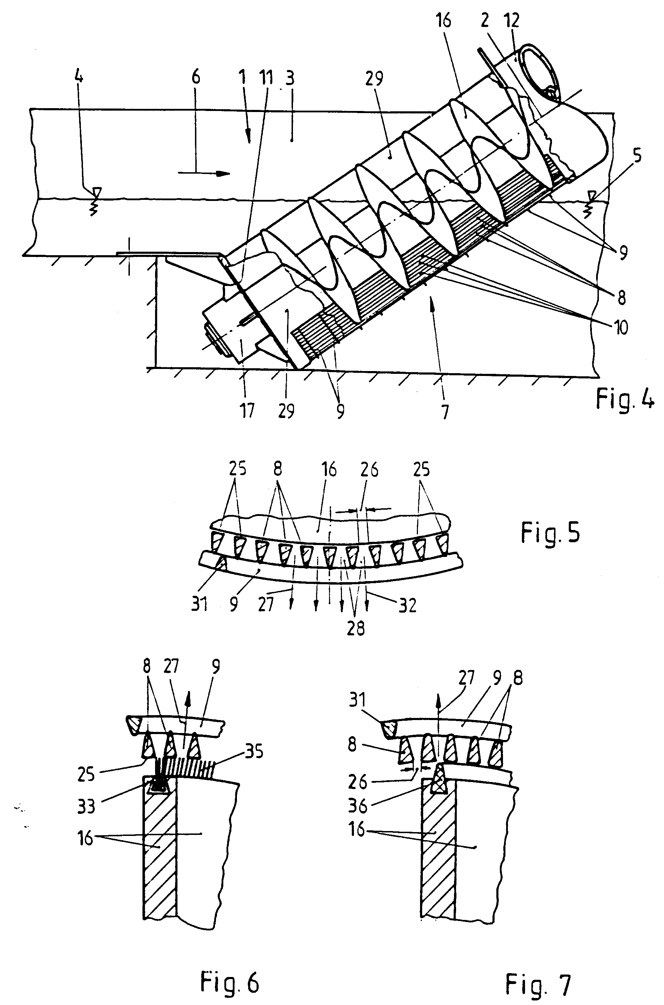

Die Ausführungsform der Vorrichtung gemäß den Figuren 3 und 4 ist an sich ähnlich aufgebaut wie die Ausführungsformen der Figuren 1 und 2. Figur 4 läßt deutlich erkennen, daß die Abstützstäbe 9 auf größerem Durchmesser angeordnet sind als die Roststäbe 8, so daß die Anordnung der Abstützstäbe 9 die Längsschlitze 10 zwischen den Roststäben 8 nicht beeinträchtigen und nicht unterbrechen. Aus Figur 4 und auch aus Figur 3 ist erkennbar, daß der Rost 7 von gehäuseartigen Einlaufwandungen 29 umgeben ist, so daß der Rost 7 hierdurch zusätzlich stabilisiert angeordnet ist. Das untere Lager 17 kann bei dieser Ausführungsform auch fehlen. Stattdessen besteht die Möglichkeit, Gleitlagerringe 30 anzuordnen, die oberhalb des Wasserstands 4 bzw. 5 vorgesehen sind, so daß damit sämtliche Lager für die Welle 15 bzw. die Förderwendel 16 außerhalb des Wassers vorgesehen sind. Die Figuren 3 und 4 verdeutlichen auch den gegenseitigen Abstand der Abstützstäbe 9 im Verhältnis zu der Ausbildung und Anordnung der Roststäbe 8.

Aus Figur 4 ist auch erkennbar, daß auch die Abstützstäbe 9 einen etwa dreieckigen oder auch trapezförmigen Querschnitt aufweisen können, jedoch in umgekehrter Richtung angeordnet sind, wie der Querschnitt der Roststäbe 8. Dies wird im übrigen auch aus Figur 5 erkennbar, die einen Ausschnitt zeigt. Es ist dort ein Schnitt etwa senkrecht zur Achse 2 der Vorrichtung dargestellt, so daß die Querschnittsform und Anordnung der Roststäbe 8 und der Abstützstäbe 9 in ihrer gegenseitigen Zuordnung besonders gut erkennbar sind. Ein Querschnitt 31 der Abstützstäbe 9 ist hier der Deutlichkeit halber eingezeichnet. Die beiden Spitzen der dreieckigen Querschnitte sind einander zugekehrt, so daß hier eine verhältnismäßig kleine Berührfläche geschaffen ist, so daß die Roststäbe 8 und die Abstützstäbe 9 vorteilhaft durch eine Schweißverbindung unter Druck miteinander in Verbindung gebracht werden können, wobei eine große Vielzahl von Verbindungsstellen entsteht und andererseits der Durchmesser und die Anordnung der Dreiecksseiten 25 auf ihrem Durchmesser nicht beeinträchtigt wird. Aus dieser Darstellung ist auch gut die engste Stelle 26 und der sich darin anschließende erweiternde Querschnitt 28 zu sehen, jeweils gesehen in Strömungsrichtung 32 der Flüssigkeit, d. h. radial zu der Achse 2 bzw. in Richtung des Pfeils 27.

In den Figuren 6 und 7 sind zwei Schnittdarstellungen etwa senkrecht zu der Achse 2 der Vorrichtung dargestellt, um zu verdeutlichen, auf welche Art und Weise der Kontakt zwischen der Förderwendel 16 und dem Rost 7 noch weiter verbessert werden kann. Die Förderwendel 16 weist einen äußeren Rand 33 auf, der den Dreiecksseiten 25 der Roststäbe 8 des Rosts 7 zugekehrt ist. In dieser Fläche ist zweckmäßig eine schwalbenschwanzförmige Nut 34 eingearbeitet, in welcher eine Borstenleiste 35 (Figur 6) oder eine Abstreiflippe 37 (Figur 7) eingelassen sind. Die Abstreifleiste 36 ist zweckmäßig als weiches, aber abriebfestes Kunststoffprofil ausgebildet. Durch die Rückstellkraft der Borsten der Borstenleiste 35 bzw. die Elastizität der Abstreiflippe 36 wird gewährleistet, daß beim Umlauf die Förderwendel 16 an jeder Stelle des Umfangs in Kontakt mit den Dreiecksseiten 25 der Roststäbe 8 bleibt und das dort abgelagerte Rechengut verläßlich abstreift, nach oben fördert und auf diese Art und Weise den Rost 7 kontinuierlich reinigt.

## Patentansprüche

1.  Vorrichtung zum Entfernen von Rechen- und/oder Siebgut aus in einem Gerinne strömender Flüssigkeit, mit einem bis zur Sohle des Gerinnes reichenden, schrägstehend und nichtangetrieben angeordneten, teilweise in die Flüssigkeit eintauchenden zylindermantelförmigen Rost, der über die Rosthöhe durchgehende Roststäbe und zwischen diesen gebildete Längsspalte aufweist, und in eine schräg aufwärts gerichtete, zu einer Abwurfstelle führende und als Schneckenfördereinrichtung mit Gehäuse, Welle und Förderwendel ausgebildete Förderstrecke für das Rechengut übergeht, wobei die Förderwendel an den Roststäben entlangstreichend das Rechengut abnimmt, nach oben fördert und so den Rost immer wieder reinigt, dadurch gekennzeichnet, daß die Roststäbe (8) etwa dreieckigen oder trapezförmigen Querschnitt aufweisen und so angeordnet sind, daß eine Dreieck- bzw. Trapezseite (25) des Querschnitts tangential zum Umlaufrichtung der Förderwendel (16) Zeigt und sich im übrigen eine engste Stelle (26) der Längsspalte (10) auf möglichst kleinem Radius und daran anschließend ein sich überproportional erweiternder freier Querschnitt (28) der Längsspalte (10) in Strömungsrichtung (32) der Flüssigkeit ergibt, daß die Kanten des Querschnitts der Roststäbe (8) zur Steigerung der Abscheidewirkung und zur Reduktion der Abschneidewirkung der Förderwendel (16) abgerundet ausgebildet sind, daß die die Längsspalte (10) bildenden Roststäbe (8) außen durch Abstützstäbe (9) untereinander verbunden sind, und daß die Welle (15) der Schneckenfördereinrichtung (13) nur im Bereich der sich an den Rost (7) nach oben anschließenden Förderstrecke vorgesehen ist.

2.  Vorrichtung nach Anspruch 1, dadurch gekennzeichnet, daß der Querschnitt der Poststäbe (8) symmetrisch zur Strömungsrichtung (32) der Flüssigkeit ausgebildet ist.

3.  Vorrichtung nach Anspruch 1, dadurch gekennzeichnet, daß auch die Abstützstäbe (9) dreieckigen oder trapezförmigen Querschnitt (31) aufweisen und so angeordnet sind, daß die größte Querschnittsbreite nach außen in Strömungsrichtung (32) zeigt.

**4.** Vorrichtung nach Anspruch 1 bis 3, dadurch gekennzeichnet, daß die Roststäbe (8) und die Abstützstäbe (9) etwa gleichen Querschnitt aufweisen.

**5.** Vorrichtung nach Anspruch 3 oder 4, dadurch gekennzeichnet, daß die Abstützstäbe (9) in einem solchen Abstand zueinander auf dem Umfang des zylindrischen Rosts (7) angeordnet sind, der etwa der zehnfachen maximalen Breite der Roststäbe (8) entspricht.

**6.** Vorrichtung nach Anspruch 1, dadurch gekennzeichnet, daß der Rost (7) aus Roststäben (8) und Abstützstäben (9) an seinem unteren Ende stirnseitig offen ausgebildet ist.

**7.** Vorrichtung nach Anspruch 6, dadurch gekennzeichnet, daß die Förderwendel (16) der Schneckenfördereinrichtung (13) an ihrem unteren Ende frei auskragend vorgesehen und oberhalb des Rosts (7) durch ein oder mehrere Gleitlagerringe (30) abgestützt ist.

**8.** Vorrichtung nach Anspruch 1, dadurch gekennzeichnet, daß der mit den Roststäben (8) des Rosts (7) in Kontakt kommende Teil der Förderwendel (16) auf seinem äußeren Umfang elastisch ausgebildet ist.

**9.** Vorrichtung nach Anspruch 8, dadurch gekennzeichnet, daß die Förderwendel (16) auf ihrem äußeren Umfang mit einer Borstenleiste (35), einer elastischen Abstreiflippe (36) o. dgl. versehen ist.

**10.** Vorrichtung nach Anspruch 1, dadurch gekennzeichnet, daß im Bereich des Rosts (7) seitlich gehäuseartige Einlaufwandungen (29) vorgesehen sind.

**11.** Vorrichtung nach Anspruch 1, dadurch gekennzeichnet, daß die über den Bereich des Rosts (7) und die anschließende Förderstrecke durchgehende Förderwendel (16) im Bereich des Rosts (7) einen größeren Außendurchmesser als im Bereich der anschließenden Förderstrecke aufweist, und daß der Rost (7) auf entsprechend größerem Durchmesser als das Gehäuse (12) der Schneckenfördereinrichtung (13) angeordnet ist.

**Claims**

**1.** Device for the removal of raked and/or screened material from a liquid flowing within a channel, having a cylinder-jacket-shaped grate, which extends as far as the floor of the channel, is disposed in a tilted and non-driven manner and dips partially into the liquid and which further exhibits grate bars, extending over the full height of the grate, and longitudinal gaps formed between these and merges into an obliquely upwardly directed conveying track for the raked material, leading to a dumping point and configured as a worm conveyor mechanism having housing, shaft and conveyor spiral, the conveyor spiral, in brushing along against the grate bars, removing the raked material, conveying it upwards and thus repeatedly cleaning the grate, characterised in that the grate bars (8) exhibit, for example, a triangular or trapezoidal cross-section and are disposed such that a triangle side or trapezium side (25) of the cross-section is tangential to the direction of circulation of the conveyor spiral (16) and that, moreover, a narrowest point (26) of the longitudinal gaps (10) is produced on the smallest possible radius and, adjoining this, an overproportionally extending free cross-section (28) of the longitudinal gaps (10) in the direction of flow (32) of the liquid, in that the edges of the cross-section of the grate bars (8) are of rounded configuration in order to enhance the separating effect and to reduce the separating effect of the conveyor spiral (16), in that the grate bars (8) forming the longitudinal gaps (10) are interconnected on the outside by support bars (9), and in that the shaft (15) of the worm conveyor mechanism (13) is provided only in the area of the conveying track upwardly adjoining the grate (7).

**2.** Device according to Claim 1, characterised in that the cross-section of the grate bars (8) is configured to be symmetrical to the direction of flow (32) of the liquid.

**3.** Device according to Claim 1, characterised in that the support bars (9) exhibit a triangular or trapezoidal cross-section (31) and are disposed such that the largest cross-sectional width points outwards in the direction of flow (32).

**4.** Device according to Claims 1 to 3, characterised in that the grate bars (8) and the support bars (9) exhibit an approximately equal cross-section.

**5.** Device according to Claim 3 or 4, characterised in that the support bars (9) are spaced on the periphery of the cylindrical grate (7) at an interval corresponding to about ten times the maximum width of the grate bars (8).

**6.** Device according to Claim 1, characterised in that the grate (7), comprising grate bars (8) and support bars (9), is openly configured at its lower end, on the face side.

7. Device according to Claim 6, characterised in that the conveyor spiral (16) of the worm conveyor mechanism (13) is designed to be freely protruding at its lower end and can be supported above the grate (7) by one or more plain bearing rings (30).

8. Device according to Claim 1, characterised in that the part of the conveyor spiral (16) coming into contact with the grate bars (8) of the grate (7) is elastically configured on its outer periphery.

9. Device according to Claim 8, characterised in that the conveyor spiral (16) is provided on its outer periphery with a bristle strip (35), an elastic wiping lip (36) or the like.

10. Device according to Claim 1, characterised in that, in the area of the grate (7), at the side, housing-like intake walls (29) are provided.

11. Device according to Claim 1, characterised in that the conveyor spiral (16) running right across the area of the grate (7) and through the adjoining conveying track exhibits, in the area of the grate (7), a larger outer diameter than in the area of the adjoining conveying track, and in that the grate (7) is disposed on a correspondingly larger diameter than the housing (12) of the worm conveyor mechanism (13).

**Revendications**

1. Dispositif pour enlever des déchets solides d'un liquide coulant dans un égout, avec une grille en forme d'enveloppe cylindrique s'étendant jusqu'au fond de l'égout, disposée obliquement et non-entraînée, plongeant partiellement dans le liquide, présentant des barreaux de grille s'étendant en continu sur la hauteur de la grille, et des fentes longitudinales formées entre ceux-ci, laquelle grille se raccorde à une ligne de transport des déchets solides orientée obliquement vers le haut et aboutissant à un poste d'évacuation, réalisée sous la forme d'un transporteur à vis sans fin avec un boîtier, un arbre et une hélice transporteuse, l'hélice transporteuse entraînant les déchets solides en frottant légèrement le long des barreaux de la grille, en transportant ces déchets vers le haut et en nettoyant ainsi continuellement la grille,

caractérisé en ce que les barreaux (8) de la grille présentent une section sensiblement triangulaire ou trapézoïdale et sont disposés de telle sorte qu'un côté (25) du triangle ou du trapèze de la section est orienté tangentiellement au sens de rotation de l'hélice transporteuse (16) et qu'il en résulte en outre un endroit le plus étroit (26) de la fente longitudinale (10) sur un rayon aussi petit que possible et, se raccordant à celui-ci, une section libre (28) de la fente longitudinale (10) s'élargissant de façon plus que proportionnelle dans le sens (32) de l'écoulement du liquide; en ce que les arêtes de la section des barreaux (8) de la grille sont arrondies pour augmenter l'effet de séparation et pour réduire l'effet de cisaillement de l'hélice transporteuse (16); en ce que les barreaux (8) de la grille formant les fentes longitudinales (10) sont reliés entre eux extérieurement par des barreaux de soutien (9); et en ce que l'arbre (15) du transporteur à vis sans fin (13) est prévu seulement dans la région de la ligne de transport se raccordant vers le haut à la grille (7).

2. Dispositif selon la revendication 1, caractérisé en ce que la section transversale des barreaux (8) de la grille est symétrique par rapport au sens (32) de l'écoulement du liquide.

3. Dispositif selon la revendication 1, caractérisé en ce que les barreaux de soutien (9) présentent, eux aussi, une section (31) triangulaire ou trapézoïdale et sont disposés de telle sorte que la plus grande largeur de la section soit tournée vers l'extérieur dans le sens (32) de l'écoulement.

4. Dispositif selon les revendications 1 à 3, caractérisé en ce que les barreaux (8) de la grille et les barreaux de soutien (9) présentent sensiblement la même section transversale.

5. Dispositif selon la revendication 3 ou 4, caractérisé en ce que les barreaux de soutien (9) sont disposés sur le pourtour de la grille cylindrique (7) avec un espacement entre eux correspondant sensiblement au décuple de la largeur maximale des barreaux (8) de la grille.

6. Dispositif selon la revendication 1, caractérisé en ce que la grille (7) constituée par les barreaux de grille (8) et les barreaux de soutien (9) est ouverte sur sa face frontale à son extrémité inférieure.

7. Dispositif selon la revendication 6, caractérisé en ce que l'hélice transporteuse (16) du transporteur à vis sans fin (13) est prévue pour faire saillie librement à son extrémité inférieure et est soutenue au-dessus de la grille (7) par un ou plusieurs paliers lisses (30).

8. Dispositif selon la revendication 1, caractérisé en ce que la partie de l'hélice transporteuse (16) venant en contact avec les barreaux (8) de la grille est conformée élastiquement sur son pourtour extérieur.

9. Dispositif selon la revendication 8, caractérisé en ce que l'hélice transporteuse (16) est munie sur son pourtour extérieur d'une latte à brosses (35), d'une lèvre râcleuse élastique (36) ou autre.

10. Dispositif selon la revendication 1, caractérisé en ce que sont prévues latéralement dans la région de la grille, des parois (29) pour l'entrée du liquide, analogues à un boîtier.

11. Dispositif selon la revendication 1, caractérisé en ce que l'hélice transporteuse (16) s'étendant de façon continue dans la région de la grille (7) et dans la ligne de transport lui faisant suite présente, dans la région de la grille (7), un diamètre extérieur plus grand que dans la région de la ligne de transport lui faisant suite, et en ce que la grille (7) est, de façon correspondante, disposée sur un diamètre plus grand que celui du boîtier (12) de transporteur à vis sans fin (13).

Fig. 1

Fig. 2

Fig. 3

EP 0 293 515 B1

Fig. 4

Fig. 5

Fig. 6

Fig. 7